# EUROPÄISCHE PATENTSCHRIFT

(11) **EP 1 128 199 B1**
(45) Veröffentlichungstag und Bekanntmachung des Hinweises auf die Patenterteilung: **27.11.2002**
(21) Anmeldenummer: 01201654.9
(22) Anmeldetag: 26.06.1999
(51) Int. Cl.: G02B 6/38

(54) **Steckverbindung für Lichtwellenleiter**
Plug connection for light guides
Prise de connexion pour des guides d'ondes lumineuses

(30) Priorität: 27.07.1998 CH 158398
(43) Veröffentlichungstag der Anmeldung: 29.08.2001
(62) Teilanmeldung aus: 99810547.2
(73) Patentinhaber: HUBER & SUHNER AG, 9100 Herisau (CH)
(72) Erfinder: Züllig, Marc-Andrew, 9100 Herisau (CH)
(74) Vertreter: Isler & Pedrazzini AG

(56) Entgegenhaltungen:
- EP-A- 0 374 136
- EP-A- 0 893 716
- EP-B- 0 570 652
- PATENT ABSTRACTS OF JAPAN vol. 015, no. 119 (P-1183), 22. März 1991 (1991-03-22) & JP 03 009308 A (FUJITSU LTD), 17. Januar 1991 (1991-01-17)

## Beschreibung

### TECHNISCHES GEBIET

Die vorliegende Erfindung bezieht sich auf das Gebiet Lichtleitertechnik. Sie betrifft eine Steckverbindung für Lichtwellenleiter gemäss dem Oberbegriff des Anspruchs 1 oder 3.

Vergleichbare Steckverbindungen sind z.B. aus den Druckschriften EP-B1-0 570 652, EP-B1-0 599 784 oder EP-A1-0 823 649 bekannt. Auf deren Inhalt wird in der vorliegenden Anmeldung Bezug genommen.

### STAND DER TECHNIK

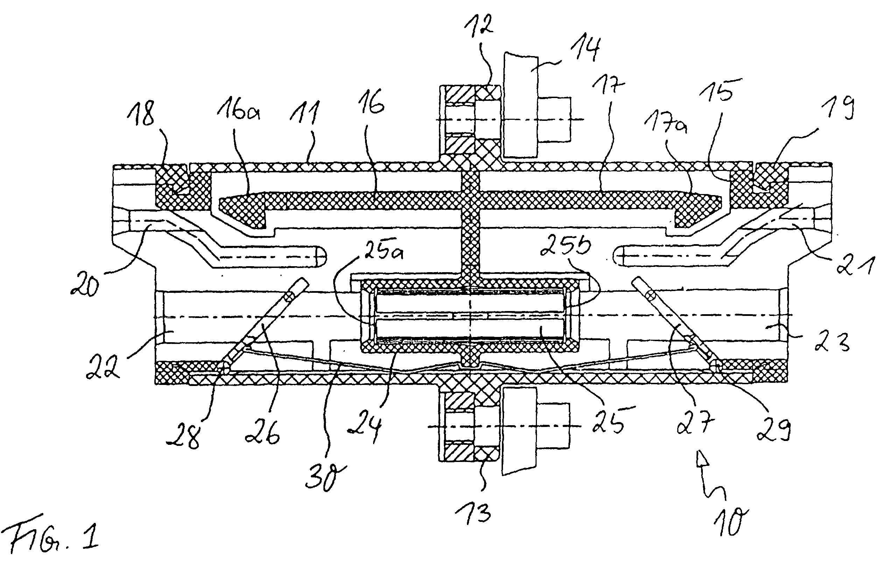

Aus den eingangs genannten Druckschriften ist ein Steckverbindungssystem für Lichtwellenleiter bekannt, bei dem zwei Lichtleiter, die mit ihren Enden jeweils in einem Steckerteil untergebracht und fixiert sind, durch Einstecken der beiden Steckerteile in ein Buchsenteil miteinander lösbar optisch verbunden werden können. Das Buchsenteil dieser bekannten Steckverbindung ist im Längsschnitt in Fig. 1 wiedergegeben.

Das Buchsenteil 10 gemäss Fig. 1 besteht aus einem länglichen, im Querschnitt rechteckigen, auf zwei gegenüberliegenden Seiten offenen, äusseren Buchsengehäuse 11, in welches ein inneres Buchsengehäuse 15 einrastend eingeschoben ist. Das innere Buchsengehäuse 15 ragt auf den beiden Seiten teilweise aus dem äusseren Buchengehäuse 11 heraus. Auf die herausragenden Teile des inneren Buchsengehäuses 15 ist auf den beiden Seiten jeweils ein Rahmen 18, 19 aufgeschnappt, der an das äussere Buchsengehäuse 11 anschliesst. Am äusseren Buchsengehäuse 11 sind auf der Ober- und Unterseite jeweils Flansche 12, 13 angeformt, mittels derer das Buchsenteil 10 in der dafür vorgesehenen Oeffnung einer Gehäusewand 14 befestigt werden kann.

Am inneren Buchsengehäuse 15 sind auf der Oberseite von der Mitte zu den beiden Seiten ausgehend zwei federnde Zungen 16 und 17 ausgeformt, die an ihren freien Enden jeweils in eine nach innen in das Gehäuse hineinragende Sperrklinke 16a bzw. 17a übergehen. Wie in Fig. 10 der EP-B1-0 570 652 dargestellt, rasten die Sperrklinken 16a, 17a nach dem Einstecken eines Steckerteils durch Hintergreifen einer am Steckerteil quer angeordneten Sperrleiste ein und halten das Steckerteil in der eingesteckten Position. Zum Lösen der Verrastung ist am Stekkerteil ein Entriegelungshebel angebracht, mit welchem die Zungen 16 bzw. 17 angehoben und die Sperrklinken 16a, 17a entriegelt werden können, wie dies in der zugehörigen Beschreibung der EP-B1-0 570 652 erläutert ist.

In der Mitte des Buchsenteils 10 bzw. in der Mitte des inneren Buchsengehäuses 15 ist die eigentliche Buchse 25 angeordnet. Die Buchse 25 hat die Form eines Zylindermantels, in welchen von beiden Seiten durch entsprechende Einstecköffnungen 25a,b die Steckerstifte der zu verbindenden Steckerteile eingesteckt werden. Die Buchse 25, die im Unterschied zu den aus Kunststoff hergestellten Gehäuseteilen 11, 15 üblicherweise aus Keramik ist, ist in einer Buchsenhalterung 24 (aus Kunststoff) gelagert, die von der Unterseite her in das innere Buchsengehäuse 15 einsetzbar ist. Damit die Steckerstifte sicher in die Einstecköffnungen 25a,b eingeführt werden können, sind an den Seitenwänden des inneren Buchsengehäuses 15 erste Führungsnuten 22, 23 vorgesehen, in welchen die Steckerteile mittels angeformter Seitenleisten (44 in Fig. 8 der EP-B1-0 570 652) geführt werden.

Eine Steckverbindung der beschriebenen Art erfordert verschiedenartige Schutzvorrichtungen. Zum einen soll aus Sicherheitsgründen möglichst vermieden werden, dass Laserlicht aus den zu verbindenden Lichtwellenleitern nach aussen gelangen und das Auge eines Betrachters schädigen kann. Zum anderen ist eine sichere optische Verbindung zwischen den Enden der beiden zu verbindenden Lichtwellenleiter nur dann gegeben, wenn Verschmutzungen im Bereich der Verbindungsstelle, insbesondere durch Staub, auf ein Minimum reduziert werden.

Aus der US-A-4,673,242 ist es bekannt, bei einem Steckerteil eine beim Einstecken federnd zurückschiebbare Abdeckung des Leiterendes vorzusehen, um das Steckerteil vor Verschmutzung zu schützen und den Lichtstrahl am Austreten zu hindern. Das zugehörige Buchsenteil ist dagegen ungeschützt. In der US-A-4,640,575 ist weiterhin eine Abdeckvorrichtung für eine Anschlussbuchse beschrieben, die mittels einer mit einem elastischen Gedächtnis ausgestatteten Lasche an der Gehäusewand befestigt ist und in einer ersten Stellung den Lichtstrahl blockiert und in einer zweiten, Kraftanwendung erreichbaren Stellung die Buchse von aussen staubdicht abschliesst. Eine solch Schutzvorrichtung ist jedoch durch die spezielle Materialauswahl nicht nur aufwendig und teuer in der Herstellung, sondern beansprucht vor allem sehr viel Platz, so dass sie praktisch nicht in das eigentliche Buchsenteil integriert werden kann. Eine weitere, integrierte Schutzvorrichtung ist aus der US-A-4,767,179 bekannt. In diesem Fall wird die Zunge eines dünnen Metallbleches, welche bei gelöster Steckverbindung die Einstecköffnung einer Buchse abschliesst, durch das Steckerteil beim Einstecken elastisch nach innen umgebogen. Die dabei auftretenden Kräfte können allerdings nur dadurch aufgefangen werden, dass die Basisfläche des Metallbleches zwischen dem Buchsengehäuse und einer darunterliegenden gedruckten Schaltungsplatte fest verankert ist. Für ein frei herausstehendes Buchsenteil gemäss Fig. 1 ist eine solche Vorrichtung daher nicht geeignet.

Bei den Steckverbindungen aus den eingangs genannten Druckschriften EP-B1-0 570 652, EP-B1-0 599 784 und EP-A1-0 823 649 sind bei den Steckerteilen zum Schutz der empfindlichen Lichtwellenleiterenden schwenkbare Klappen vorgesehen, die beim Einstecken in ein Buchsenteil 10 gemäss Fig. 1 mit angeformten Steuernocken in zweite Führungsnuten 20, 21 in den Seitenwänden des inneren Buchsengehäuses 15 eingreifen und durch den speziellen Verlauf der zweiten Führungsnuten 20, 21 zum Aufklappen gebracht werden (siehe dazu Fig. 10 der EP-B1-0 570 652. Beim Buchsenteil 10 ist dagegen im zitierten Stand der Technik ein integrierter Staubschutz nicht vorgesehen. Innerhalb des inneren Buchsengehäuses 15 ist lediglich eine Schutzvorrichtung gegen das Austreten von Lichtstrahlen vorhanden, die zwei Strahlenschutzklappen 26 und 27 umfasst (Fig. 1). die beiden Schutzklappen sind durch angeformten Gelenknocken 28, 29 im Boden des inneren Buchsengehäuses 15 schwenkbar gelagert und werden durch eine gemeinsame, in das Gehäuse eingelegte, zweiarmige Blattfeder 30 solange in der in Fig. 1 gezeigten Stellung gehalten, bis sie durch ein eingestecktes Steckerteil gegen die Federkraft auf den Boden gedrückt werden und den Zugang zu den Einstecköffnungen 25a,b der Buchse 25 freigeben.

Wie man aus der Darstellung der Fig. 1 unschwer erkennen kann, blockieren die Strahlenschutzklappen 26, 27, die deutlich kleiner Abmessungen haben, als die Einstecköffnungen des inneren Buchsengehäuses 15, lediglich den in der Mittelachse der Buchse 25 liegenden Strahlengang. Staub und Schmutz können dagegen nahezu ungehindert von aussen an den Strahlenschutzklappen 26, 27 vorbei in das Innere des inneren Buchsengehäuses 15 und damit auch in das Innere der Buchse 25 gelangen und sich dort zwischen die Steckerstifte zweier eingesteckter Steckerteile setzen und so die optische Verbindung beeinträchtigen oder ganz unterbrechen.

Weiterhin ist in der EP-A-0 374 136 ein faseroptischer Steckverbinder beschrieben (Fig. 26), bei dem das äussere Gehäuse, in dem die eigentliche Führungsbuchse untergebracht ist, beidseitig durch nach innen aufschwenkbare Klappen verschlossen werden kann.

Eine ähnlich wirkende, allerdings nach aussen aufschwenkbare Schutzklappe ist am äusseren Gehäuse des in der EP-A1-0 697 607 gezeigten Steckverbinders angelenkt.

Es ist aber auch bekannt, anstelle einer einseitig angelenkten schwenkbaren Klappe zwei in der Mitte aneinanderstossende Flügel vorzusehen, um das äussere Gehäuse eines optischen Steckverbinders nach aussen hin zu verschliessen (JP-A-3009308).

### DARSTELLUNG DER ERFINDUNG

Es ist Aufgabe der Erfindung, eine Steckverbindung zu schaffen, bei der das Buchsenteil durch eine integrierte Schutzvorrichtung gegen Verschmutzung von aussen geschützt ist, die einfach und funktionssicher ist und nur wenig Platz beansprucht, so dass sie in bereits vorhanden genormte Steckverbindungen ohne Aenderung der Abmessungen integriert werden kann.

Die Aufgabe wird durch die Gesamtheit der Merkmale aus dem Anspruch 1 oder 3 gelöst. Der Kern der Erfindung besteht darin, auf nach innen verschwenkbaren Flügeln, die zum staubdichten Verschliessen vorgesehen sind, zusätzliche Elemente in Fom von Sperrklinken oder Führungsnuten vorzusehen, welche mit den einzusteckenden Steckern in Eingriff kommen.

Die eine Lösung ist dadurch gekennzeichnet, dass die Flügel jeweils einen ersten Flügel und einen zweiten Flügel umfassen, welche in der zweiten Schwenkstellung in einer Mittelebene aneinanderstossen, dass im inneren Buchsengehäuse eine federnde Sperrklinke zum lösbaren Einrasten eines eingesteckten Steckerteils vorgesehen ist, dass die Sperrklinke jeweils auf der Aussenseite eines der Flügel, insbesondere des zweiten Flügels angeordnet ist, und dass die diesem Flügel zugeordneten Federmittel gleichzeitig die Federung der Sperrklinke bewirken. Durch die Integration der Sperrklinke in einen der Flügel kann auf die in einer Wand des inneren Buchsengehäuses ausgeformten federnden Zungen, wie sie in Fig. 1 dargestellt sind, verzichtet werden, wodurch sich das Spritzwerkzeug für das innere Buchsengehäuse deutlich vereinfacht.

Die andere Lösung zeichnet sich dadurch aus, dass in den Seitenwänden des inneren Buchsengehäuses Führungsnuten zum Führen des Steckerteils beim Einstecken vorgesehen sind, und dass die Flügel auf ihren Aussenseiten mit Nutabschnitten ausgestattet sind, welche, wenn sich die Flügel in der ersten Schwenkstellung befinden, einen Abschnitt der Führungsnuten bilden. Mit dieser Art von Flügeln kann der Rastmechanismus mit den obenliegenden federnden Zungen (16, 17 in Fig. 1) nahezu unverändert beibehalten werden. Durch die Nutabschnitte an den Flügeln ist dabei gewährleistet, dass die verschiedenen Führungsnuten für die Steckerteile erhalten bleiben, obgleich die Flügel durch die Ebenen der Führungsnuten hindurchgeschwenkt werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt ein Buchsenteil einer aus dem Stand der Technik bekannten Steckverbindung mit integrierten Strahlenschutzklappen;
- Fig. 2: im Längsschnitt die eine Seite eines Buchsenteils gemäss Fig. 1 mit einer aus einem oberen und unteren Flügeln bestehenden Staubschutzvorrichtung gemäss einem zweiten bevorzugten Ausführungsbeispiel im geschlossenen Zustand;
- Fig. 3: die Staubschutzvorrichtung nach Fig. 3 im geöffneten Zustand (ohne einsteckendes Steckerteil);
- Fig. 4: im Längsschnitt die eine Seite eines Buchsenteils gemäss Fig. 1 mit einer aus zwei Seitenflügeln bestehenden Staubschutzvorrichtung gemäss einem dritten bevorzugten Ausführungsbeispiel im geschlossenen Zustand;
- Fig. 5: die Ansicht des Beispiels aus Fig. 5 in der Schnittebene VI - VI aus Fig. 5;
- Fig. 6: die Staubschutzvorrichtung nach Fig. 5 im geöffneten Zustand (ohne einsteckendes Steckerteil); und
- Fig. 7: die Ansicht des Beispiels aus Fig. 7 in der Schnittebene VIII - VIII aus Fig. 7;

### WEGE ZUR AUSFÜHRUNG DER ERFINDUNG

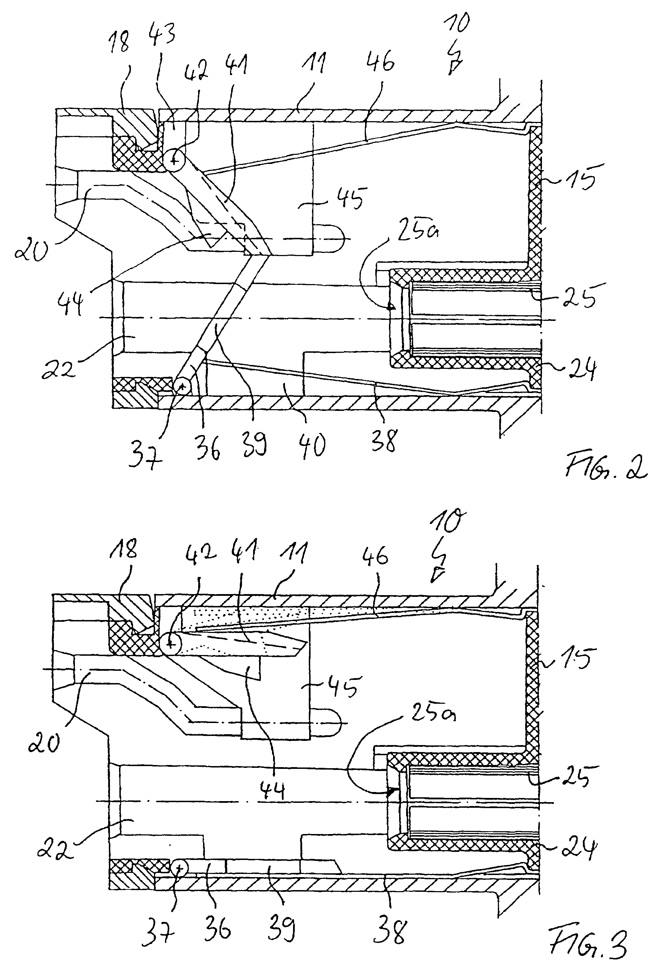

Ein erstes Ausführungsbeispiel ist in den Fig. 2 und 3 dargestellt, wobei in Fig. 2 die Staubschutzvorrichtung (in einer zweiten Schwenkstellung) geschlossen, in Fig. 3 dagegen (in einer ersten Schwenkstellung) geöffnet ist. Auch in diesen Figuren wird von dem Buchsenteil 10 gemäss Fig. 1 ausgegangen, dessen linke Hälfte in Fig. 2 und 3 im Längsschnitt wiedergegeben ist. Für dieselben Teile werden dabei dieselben Bezugszeichen verwendet, wie in Fig. 1.

Bei der in Fig. 2 und 3 gezeigten Ausführungsform sind die Mittel zum staubdichten Abschliessen, d.h. die eigentliche Staubschutzvorrichtung, vollständig innerhalb des Buchsenteils 10, insbesondere innerhalb des inneren Buchsengehäuses 15 angeordnet. Die Staubschutzmittel umfassen zwei (rechteckige) Flügel 36 und 41, welche im Bereich der Einstecköffnung des Buchsenteils 10 auf gegenüberliegenden Seiten des inneren Buchsengehäuses 15 nach innen verschwenkbar gelagert sind. In der ersten Schwenkstellung (Fig. 3) liegen die Flügel 36, 41 im wesentlichen parallel zu und eng an den Wänden des inneren Buchsengehäuses 15. Sie ermöglichen so ein ungehindertes Einstecken des Steckerteils. In der zweiten Schwenkstellung (Fig. 2) sind sie zur Mitte verschwenkt und stossen in einer horizontalen Mittelebene des Buchsenteils 10 mit ihren Kanten dichtend aneinander.

Die Flügel 36, 41 werden durch Federmittel, die vorzugsweise die Form von zweiarmigen Blattfedern 38 und 46 haben, und wie sie unter dem Bezugszeichen 30 aus Fig. 1 bekannt sind, in der zweiten Schwenkstellung gehalten (Fig. 2). Beim Einstecken eines Steckerteils werden sie dann durch das Steckerteil gegen die Federspannung der Blattfedern 38, 46 in die erste Schwenkstellung verschwenkt (Fig. 3). Die automatische Betätigung durch das Steckerteil wird dabei dadurch erleichtert, dass die Flügel 36, 41 in der zweiten Schwenkstellung schräg nach innen gerichtet sind. Damit die Flügel 36, 41 verschwenkbar sind, sind an ihnen seitlich zu beiden Seiten herausstehende Gelenknocken 37, 42 angeformt, mit denen die Flügel 36, 41 in Lagerungsnuten eingesetzt werden, die an den Wänden des inneren Buchsengehäuses 15 ausgeformt sind, und von denen in Fig. 2 die obere Lagerungsnut 43 für den oberen Flügel 41 deutlich erkennbar ist. Die Flügel 36, 41 werden, bevor das innere Buchsengehäuse 15 in das äussere Buchsengehäuse 11 eingeschoben wird, mit den Gelenknocken 37 bzw. 42 in die zugehörigen Lagerungsnuten 43 eingehängt. Wenn die Gehäuse 15 und 11 ineinandergeschoben sind, sind die Flügel 36, 41 gegen ein Herausfallen gesichert. Damit die Flügel 36, 41 in dass innere Gehäuse 15 von aussen eingesetzt werden können, sind in der Wand des Gehäuses oben und unten entsprechende Aussparungen 40, 45 vorgesehen.

Der untere Flügel 36 ist zusammen mit der im zugeordneten Blattfeder 38 ähnlich aufgebaut, wie die Strahlenschutzklappe 26 aus der bekannten Steckverbindung nach Fig. 1. Während die Strahlenschutzklappe 26 aus Fig. 1 jedoch die Einstecköffnung im Bereich der Führungsnut 22 nicht abschliesst, weil die Klappe als einfaches Rechteck ausgebildet ist, sind an dem unteren Flügel 36 auf beiden Seiten seitlich herausstehende Ansätze 39 angeformt, die in der zweiten Schwenkstellung (Fig. 2) in die Führungsnut 22 hineinragen und die Einstecköffnung auch in diesem Bereich abdecken. Die Aussparung 40 ist dabei so ausgebildet, dass die seitlichen Ansätze 39 beim Herunterklappen des unteren Flügels in die erste Schwenkstellung (Fig. 3) ohne Behinderung aus der Führungsnut 22 nach unten herausgeschwenkt werden können.

Der obere Flügel 41 mit der ihm zugeordneten Blattfeder 46 nimmt bei dem Ausführungsbeispiel der Fig. 2 und 3 den Raum ein, den beim bekannten Buchsenteil aus Fig. 1 die federnde Zunge 16 mit ihrer Sperrklinke 16a beansprucht. Damit trotz eines Verzichtes auf die federnde Zunge 16 eine Verrastung des eingesteckten Steckerteils im Buchsenteil möglich ist, ist auf der Unter- bzw. Aussenseite des oberen Flügels 41 eine Sperrklinke 44 angeformt, die, wenn sich der obere Flügel 41 in der ersten Schwenkstellung (Fig. 3) befindet, den Platz der Sperrklinke 16a aus Fig. 1 einnimmt. Das Zusammenwirken vom oberen Flügel 41 und der im zugeordneten Blattfeder 46 ist so abgestimmt, dass der obere Flügel 41 über seine horizontale Lage hinaus gegen den Druck der Feder weiter nach oben verschwenkt werden kann (punktierte Linien in Fig. 3). Die Sperrklinke 44 auf der Unterseite des oberen Flügels 41 gibt dann den Weg für das einzusteckende Steckerteil frei und klinkt dann hinter der am Steckerteil vorgesehenen, eingangs beschriebenen, querliegenden Sperrleiste ein. Auf diese Weise lässt sich ohne Aenderung des Steckerteils beim Buchsenteil 10 mit einem Staubschutz gemäss Fig. 2 und 3 die Einrastfunktion in vollem Umfang aufrechterhalten.

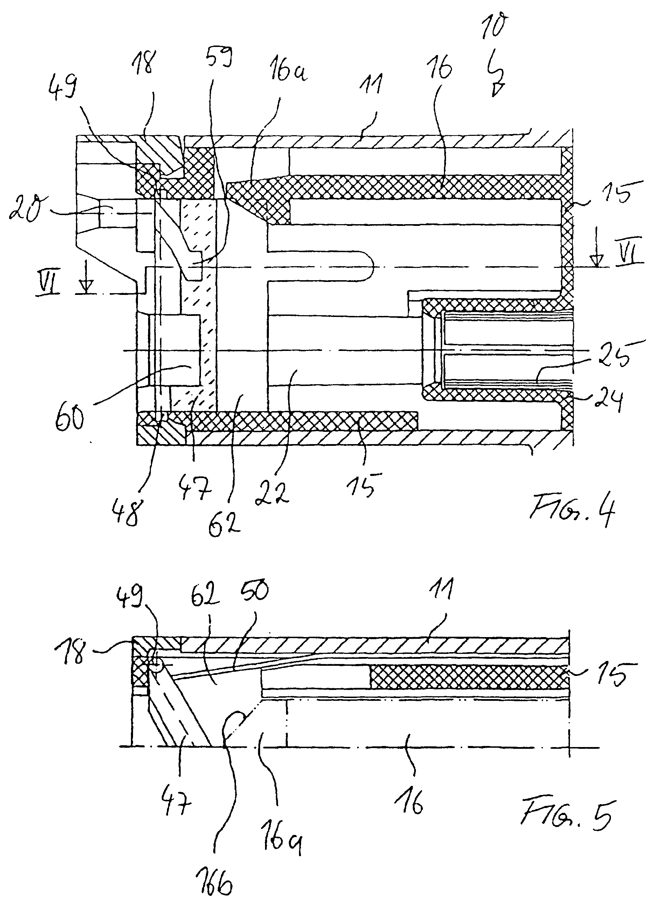

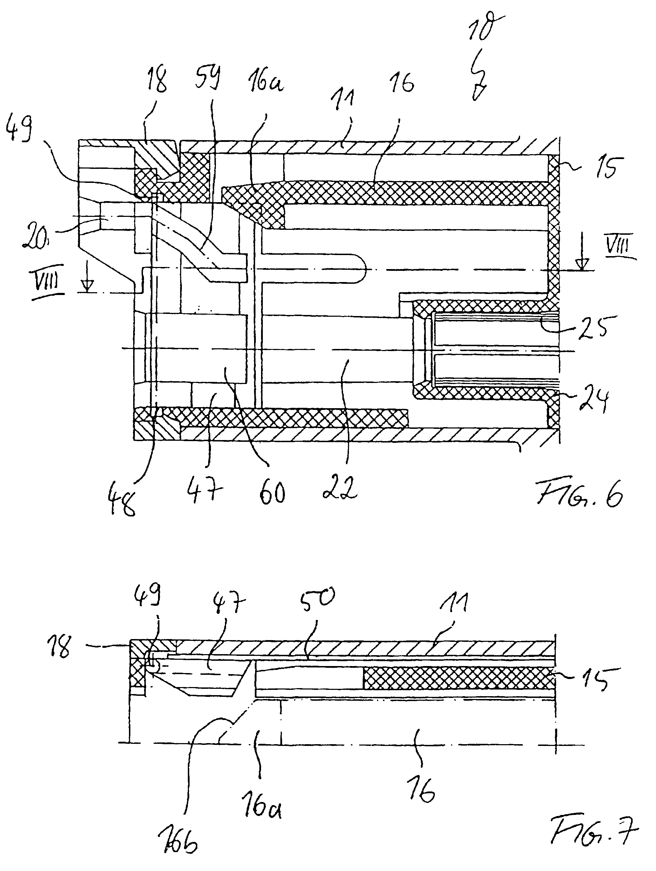

Ein weiteres bevorzugtes Ausführungsbeispiel der Erfindung, welches ebenfalls mit zwei Flügeln zum Abschliessen der Einstecköffnung arbeitet und von einem Buchsenteil 10 gemäss Fig. 1 ausgeht, ist in den Fig. 4 bis 7 dargestellt, wobei die Fig. 4 und 5 die zweite Schwenkstellung und die Fig. 6 und 7 die erste Schwenkstellung - jeweils von der Seite und von oben gesehen - im Längsschnitt zeigen. In den Figuren ist dabei nur der eine Flügel, der Seitenflügel 47, zu sehen. Der andere, nicht gezeigte Seitenflügel ist spiegelbildlich zur vertikalen Mittelebene in Fig. 5 bzw. 7 angeordnet. Im Unterschied zum Ausführungsbeispiel der Fig. 2 und 3 sind die Seitenflügel 47 - wie der Name sagt - jeweils um eine vertikale Achse schwenkbar angeordnet und stossen in der zweiten Schwenkstellung (Fig. 4 und 5) in einer vertikalen Mittelebene aneinander. Für die Schwenklagerung ist an den Seitenflügeln 47 oben und unten jeweils ein Gelenknocken 48 bzw. 49 angeformt, mit welchen die Seitenflügel 47 von der Seite her durch entsprechende Aussparungen 62 in der Seitenwand in entsprechende Lagerungsnuten im Boden bzw. in der Decke des inneren Buchsengehäuses 15 eingesetzt und gelagert werden. Die Seitenflügel 47 sind ebenfalls schräg nach innen gestellt und werden durch eine zugeordnete Blattfeder 50 in Richtung auf die zweite Schwenkstellung (Fig. 5) vorgespannt.

In der ersten Schwenkstellung (Fig. 6 und 7) bilden die herausgeschwenkten Seitenflügel 47 einen Teil der Seitenwand des inneren Buchsengehäuses 15. Wenn in den Seitenwänden die bereits erwähnten Führungsnuten 20 und 22 eingelassen sind, ist es zweckmässig, wenn auf den Aussenseiten der Seitenflügel entsprechende Nutabschnitte 59 und 60 eingelassen sind, die, wenn sich die Seitenflügel 47 in der ersten Schwenkstellung befinden, einen Abschnitt der Führungsnuten 20, 22 bilden. Auf diese Weise lassen sich die Seitenflügel 47 platzsparend in die Seitenwände des inneren Buchsengehäuses 15 integrieren, ohne dass auf durchgehende Führungsnuten 20, 22 verzichtet werden muss. Damit genügend Platz zum Verschwenken der Seitenflügel 47 da ist, werden vorhandene federnde Zungen 16 im vorderen Bereich mit einer Abschrägung 16b versehen (Fig. 5 bzw. 7).

### BEZUGSZEICHENLISTE

- 10: Buchsenteil
- 11: äusseres Buchsengehäuse
- 12,13: Flansch
- 14: Gehäusewand
- 15: inneres Buchsengehäuse (Gehäuseeinschub)
- 16,17: federnde Zunge
- 16a,17a: Sperrklinke
- 16b: Abschrägung
- 18,19: Rahmen (aufschnappbar)
- 20,21: Führungsnut (Steckerdeckel)
- 22,23: Führungsnut (Stecker)
- 24: Buchsenhalterung
- 25: Buchse
- 25a,b: Einstecköffnung (Buchse)
- 26,27: Strahlenschutzklappe
- 28,29: Gelenknocken
- 30: Blattfeder (zweiarmig)
- 36: unterer Flügel
- 37,42: Gelenknocken
- 38: Blattfeder
- 39: Ansatz
- 40: Aussparung
- 41: oberer Flügel
- 43: Lagerungsnut
- 44: Sperrklinke
- 45,62: Aussparung
- 46, 50: Blattfeder
- 47: Seitenflügel
- 48,49,55: Gelenknocken
- 59,60: Nutabschnitt

## Patentansprüche

1. Steckverbindung für Lichtwellenleiter, umfassend ein Buchsenteil (10) mit einem auf wenigstens einer Seite offenen äusseren Buchsengehäuse (11), in welches von der wenigstens einen Seite ein Steckerteil mit einem einen Lichtwellenleiter umschliessenden Steckerstift einsteckbar ist, wobei
(a) in dem äusseren Buchsengehäuse (11) eine zu der wenigstens einen Seite offene Buchse (25) angeordnet ist, welche beim Einstecken eines Steckerteils durch eine entsprechende Einstecköffnung (25a,b) den zugehörigen Steckerstift aufnimmt,
(b) am Buchsenteil (10) verschwenkbar angeordnete Mittel (31; 39, 41; 47) vorgesehen sind, welche in einer ersten Schwenkstellung ein ungehindertes Einstecken des Steckerteils ermöglichen, und in einer zweiten Schwenkstellung die Buchse (25) gegen die Umgebung des Buchsenteils (10) staubdicht abschliessen,
(c) die Mittel zum staubdichten Abschliessen (39, 41; 47) vollständig innerhalb des Buchsenteils (10) angeordnet sind,
(d) das Buchsenteil (10) ein in das äussere Buchsengehäuse (11) einschiebbares inneres Buchsengehäuse (15) umfasst, in welchem die Buchse (25) untergebracht ist,
(e) die Mittel zum staubdichten Abschliessen jeweils zwei Flügel (36, 41; 47) umfassen, welche im Bereich der Einstecköffnung des Buchsenteils (10) auf gegenüberliegenden Seiten des inneren Buchsengehäuses (15) nach innen verschwenkbar gelagert sind, und welche in der ersten Schwenkstellung im wesentlichen parallel zu den Wänden des inneren Buchsengehäuses (15) liegen und ein freies Einstecken des Steckerteils ermöglichen, und in der zweiten Schwenkstellung zur Mitte geschwenkt sind und in einer Mittelebene des Buchsenteils (10) dichtend aneinanderstossen, und
(f) die Flügel (36, 41; 47) durch Federmittel, vorzugsweise in Form von Blattfedern (38, 46; 50), in der zweiten Schwenkstellung gehalten werden, derart, dass sie beim Einstecken eines Steckerteils durch das Steckerteil gegen die Federspannung der Federmittel (38, 46; 50) in die erste Schwenkstellung verschwenkt werden,
**dadurch gekennzeichnet, dass**
(g) im inneren Buchsengehäuse (15) eine federnde Sperrklinke (44) zum lösbaren Einrasten eines eingesteckten Steckerteils vorgesehen ist, dass die Sperrklinke (44) jeweils auf der Aussenseite eines der Flügel angeordnet ist, so dass die diesem Flügel zugeordneten Federmittel (46) gleichzeitig die Federung der Sperrklinke (44) bewirken.

2. Steckverbindung nach Anspruch 1, **dadurch gekennzeichnet, dass** das Buchsenteil (10) zum entgegengesetzten Einstecken zweier Steckerteile auf gegenüberliegenden Seiten ausgebildet ist, und dass die verschwenkbar angeordneten Mittel (31; 39, 41; 47) auf beiden Seiten des Buchsenteils (10) vorgesehen sind.

3. Steckverbindung für Lichtwellenleiter, umfassend ein Buchsenteil (10) mit einem auf wenigstens einer Seite offenen äusseren Buchsengehäuse (11), in welches von der wenigstens einen Seite ein Steckerteil mit einem einen Lichtwellenleiter umschliessenden Steckerstift einsteckbar ist, wobei
(a) in dem äusseren Buchsengehäuse (11) eine zu der wenigstens einen Seite offene Buchse (25) angeordnet ist, welche beim Einstecken eines Steckerteils durch eine entsprechende Einstecköffnung (25a,b) den zugehörigen Steckerstift aufnimmt,
(b) am Buchsenteil (10) verschwenkbar angeordnete Mittel (31; 39, 41; 47; 57) vorgesehen sind, welche in einer ersten Schwenkstellung ein ungehindertes Einstecken des Steckerteils ermöglichen, und in einer zweiten Schwenkstellung die Buchse (25) gegen die Umgebung des Buchsenteils (10) staubdicht abschliessen,
(c) die Mittel zum staubdichten Abschliessen (39, 41; 47; 57) vollständig innerhalb des Buchsenteils (10) angeordnet sind,
(d) das Buchsenteil (10) ein in das äussere Buchsengehäuse (11) einschiebbares inneres Buchsengehäuse (15) umfasst, in welchem die Buchse (25) untergebracht ist,
(e) die Mittel zum staubdichten Abschliessen jeweils zwei Flügel (36, 41; 47) umfassen, welche im Bereich der Einstecköffnung des Buchsenteils (10) auf gegenüberliegenden Seiten des inneren Buchsengehäuses (15) nach innen verschwenkbar gelagert sind, und welche in der ersten Schwenkstellung im wesentlichen parallel zu den Wänden des inneren Buchsengehäuses (15) liegen und ein freies Einstecken des Steckerteils ermöglichen, und in der zweiten Schwenkstellung zur Mitte geschwenkt sind und in einer Mittelebene des Buchsenteils (10) dichtend aneinanderstossen, und
(f) die Flügel (36, 41; 47) durch Federmittel, vorzugsweise in Form von Blattfedern (38, 46; 50), in der zweiten Schwenkstellung gehalten werden, derart, dass sie beim Einstecken eines Steckerteils durch das Steckerteil gegen die Federspannung der Federmittel (38, 46; 50) in die erste Schwenkstellung verschwenkt werden,
**dadurch gekennzeichnet, dass**
(g) in den Seitenwänden des inneren Buchsengehäuses (15) Führungsnuten (20, 22) zum Führen des Steckerteils beim Einstecken vorgesehen sind, und dass die Flügel (47) auf ihren Aussenseiten mit Nutabschnitten (59, 60) ausgestattet sind, welche, wenn sich die Flügel (47) in der ersten Schwenkstellung befinden, einen Abschnitt der Führungsnuten (20, 22) bilden.

4. Steckverbindung nach Anspruch 3, **dadurch gekennzeichnet, dass** das Buchsenteil (10) zum entgegengesetzten Einstecken zweier Steckerteile auf gegenüberliegenden Seiten ausgebildet ist, und dass die verschwenkbar angeordnete Mittel (31; 39, 41; 47) auf beiden Seiten des Buchsenteils (10) vorgesehen sind.

## Claims

1. Plug-in connection for optical waveguides, comprising a bushing part (10) with an outer bushing housing (11) which is open on at least one side and into which it is possible to plug, from the at least one side, a plug part with a plug pin enclosing an optical waveguide, it being the case that
(a) arranged in the outer bushing housing (11) is a bushing (25) which is open towards the at least one side and, when a plug part is plugged in through a corresponding plug-in opening (25a, b), accommodates the associated plug pin,
(b) pivotably arranged means (31; 39, 41; 47) are provided on the bushing part (10) and, in a first pivoting position, allow the plug part to be plugged in without obstruction and, in a second pivoting position, close off the bushing (25) in a dustproof manner in relation to the surroundings of the bushing part (10),
(c) the dustproof closing-off means (39, 41; 47) are arranged entirely within the bushing part (10),
(d) the bushing part (10) comprises an inner bushing housing (15) which can be pushed into the outer bushing housing (11) and in which the bushing (25) is accommodated,
(e) the dustproof closing-off means each comprise two wings (36, 41; 47) which are mounted such that they can be pivoted inwards on opposite sides of the inner bushing housing (15) in the region of the plug-in opening of the bushing part (10) and which, in the first pivoting position, are located essentially parallel to the walls of the inner bushing housing (15), and allow the plug part to be plugged in freely, and, in the second pivoting position, are pivoted to the centre and butt against one another with sealing action in a centre plane of the bushing part (10), and
(f) the wings (36, 41; 47) are retained in the second pivoting position by spring means, preferably in the form of leaf springs (38, 46; 50) such that, when a plug part is plugged in, they are pivoted into the first pivoting position by the plug part counter to the spring stressing of the spring means (38, 46; 50),
**characterized in that**
(g) a resilient catch (44) is provided in the inner bushing housing (15) in order for a plugged-in plug part to be latched in releasably, and **in that** the catch (44) is arranged in each case on the outside of one of the wings, with the result that the spring means (46) assigned to said wing simultaneously provide for the resilient action of the catch (44).

2. Plug-in connection according to Claim 1, **characterized in that** the bushing part (10) is designed for two plug parts to be plugged in on opposite sides, and **in that** the pivotably arranged means (31; 39, 41; 47) are provided on both sides of the bushing part (10).

3. Plug-in connection for optical waveguides, comprising a bushing part (10) with an outer bushing housing (11) which is open on at least one side and into which it is possible to plug, from the at least one side, a plug part with a plug pin enclosing an optical waveguide, it being the case that
(a) arranged in the outer bushing housing (11) is a bushing (25) which is open towards the at least one side and, when a plug part is plugged in through a corresponding plug-in opening (25a, b), accommodates the associated plug pin,
(b) pivotably arranged means (31; 39, 41; 47; 57) are provided on the bushing part (10) and, in a first pivoting position, allow the plug part to be plugged in without obstruction and, in a second pivoting position, close off the bushing (25) in a dustproof manner in relation to the surroundings of the bushing part (10),
(c) the dustproof closing-off means (39, 41; 47; 57) are arranged entirely within the bushing part (10),
(d) the bushing part (10) comprises an inner bushing housing (15) which can be pushed into the outer bushing housing (11) and in which the bushing (25) is accommodated,
(e) the dustproof closing-off means each comprise two wings (36, 41; 47) which are mounted such that they can be pivoted inwards on opposite sides of the inner bushing housing (15) in the region of the plug-in opening of the bushing part (10) and which, in the first pivoting position, are located essentially parallel to the walls of the inner bushing housing (15), and allow the plug part to be plugged in freely, and, in the second pivoting position, are pivoted to the centre and butt against one another with sealing action in a centre plane of the bushing part (10), and
(f) the wings (36, 41; 47) are retained in the second pivoting position by spring means, preferably in the form of leaf springs (38, 46; 50) such that, when a plug part is plugged in, they are pivoted into the first pivoting position by the plug part counter to the spring stressing of the spring means (38, 46; 50),
**characterized in that**
(g) guide grooves (20, 22) are provided in the side walls of the inner bushing housing (15) for the purpose of guiding the plug part when the latter is plugged in, and **in that** the wings (47) are provided, on their outsides, with groove sections (59, 60) which, when the wings (47) are located in the first pivoting position, form a section of the guide grooves (20, 22).

4. Plug-in connection according to Claim 3, **characterized in that** the bushing part (10) is designed for two plug parts to be plugged in on opposite sides, and **in that** the pivotably arranged means (31; 39, 41; 47) are provided on both sides of the bushing part (10).

## Revendications

1. Connecteur à fiches pour guide d'ondes lumineuses, comprenant une partie de douille (10) avec un logement de douille extérieur (11) ouvert au moins d'un côté, dans lequel une partie de fiche avec une broche d'enfichage renfermant un guide d'ondes lumineuses peut être enfichée par l'au moins un côté,
a) une douille (25) ouverte vers l'au moins un côté étant disposée dans le logement de douille extérieur (11), laquelle douille reçoit lors de l'enfichage d'une partie de fiche à travers une ouverture d'enfichage correspondante (25a,b) la broche d'enfichage associée,
b) des moyens (31; 39, 41; 47) disposés de façon à pouvoir pivoter sur la partie de douille (10) étant prévus, lesquels permettent, dans une première position de pivotement un enfichage non entravé de la partie de fiche, et dans une deuxième position de pivotement, isolent la douille (25) de manière hermétique à la poussière par rapport à l'environnement de la partie de douille (10),
c) les moyens pour l'isolation hermétique à la poussière (39, 41; 47) étant complètement disposés à l'intérieur de la partie de douille (10),
d) la partie de douille (10) comprenant un logement de douille intérieur (15), dans lequel la douille (25) est montée, et pouvant être enfoncé dans le logement de douille extérieur (11),
e) les moyens pour l'isolation hermétique à la poussière comprenant chacun deux ailes (36, 41; 47) qui sont montées de manière à pouvoir pivoter vers l'intérieur dans la partie de l'ouverture d'enfichage de la partie de douille (10) sur des côtés opposés du logement de douille intérieur (15), et qui sont essentiellement parallèles aux parois du logement de douille intérieur (15) dans la première position de pivotement, et qui permettent un enfichage libre de la partie de fiche, et sont pivotées vers le centre dans la deuxième position de pivotement et s'appliquent l'une contre l'autre de manière hermétique dans un plan médian de la partie de douille (10), et
f) les ailes (36, 41; 47) étant maintenues dans la deuxième position de pivotement par des moyens à ressort, de préférence sous la forme de ressorts à lames (38, 46; 50), de telle sorte qu'elles soient pivotées dans la première position de pivotement lors de l'enfichage d'une partie de fiche à travers la partie de douille à l'encontre de la tension de ressort des moyens à ressort (38, 46; 50),
**caractérisé en ce que**.
g) un cliquet d'arrêt à ressort (44) est prévu dans le logement de douille intérieur (15) pour l'encliquetage desserrable d'une partie de fiche enfichée, **en ce que** le cliquet d'arrêt (44) est disposé à chaque fois du côté extérieur de l'une des ailes, de telle sorte que les moyens à ressort (46) associés à cette aile réalisent simultanément la sollicitation par ressort du cliquet d'arrêt (44).

2. Connecteur à fiches selon la revendication 1, **caractérisé en ce que** la partie de douille (10) est réalisée pour l'enfichage opposé de deux parties de fiche sur des côtés opposés, et **en ce que** les moyens (31; 39, 41; 47) disposés de manière à pouvoir pivoter sont prévus des deux côtés de la partie de douille (10).

3. Connecteur à fiches pour guide d'ondes lumineuses, comprenant une partie de douille (10) avec un logement de douille extérieur (11) ouvert au moins d'un côté, dans lequel une partie de fiche avec une broche d'enfichage renfermant un guide d'ondes lumineuses peut être enfichée par l'au moins un côté,
a) une douille (25) ouverte vers l'au moins un côté étant disposée dans le logement de douille extérieur (11), laquelle douille reçoit lors de l'enfichage d'une partie de fiche à travers une ouverture d'enfichage correspondante (25a,b) la broche d'enfichage associée,
b) des moyens (31; 39, 41; 47; 57) disposés de façon à pouvoir pivoter sur la partie de douille (10) étant prévus, lesquels permettent, dans une première position de pivotement un enfichage non entravé de 1a partie de fiche, et dans une deuxième position de pivotement, isolent la douille (25) de manière hermétique à la poussière par rapport à l'environnement de la partie de douille (10),
c) les moyens pour l'isolation hermétique à la poussière (39, 41; 47; 57) étant complètement disposés à l'intérieur de la partie de douille (10),
d) la partie de douille (10) comprenant un logement de douille intérieur (15), dans lequel la douille (25) est montée, et pouvant être enfoncé dans le logement de douille extérieur (11),
e) les moyens pour l'isolation hermétique à la poussière comprenant chacun deux ailes (36, 41; 47) qui sont montées de manière à pouvoir pivoter vers l'intérieur dans la partie de l'ouverture d'enfichage de la partie de douille (10) sur des côtés opposés du logement de douille intérieur (15), et qui sont essentiellement parallèles aux parois du logement de douille intérieur (15) dans la première position de pivotement, et qui permettent un enfichage libre de la partie de fiche, et sont pivotées vers le centre dans la deuxième position de pivotement et s'appliquent l'une contre l'autre de manière hermétique dans un plan médian de la partie de douille (10), et
f) les ailes (36, 41; 47) étant maintenues dans la deuxième position de pivotement par des moyens à ressort, de préférence sous la forme de ressorts à lames (38, 46; 50), de telle sorte qu'elles soient pivotées dans la première position de pivotement lors de l'enfichage d'une partie de fiche à travers la partie de douille à l'encontre de la tension de ressort des moyens à ressort (38, 46; 50),
**caractérisé en ce que**
g) des rainures de guidage (20, 22) pour le guidage de la partie de fiche lors de l'enfichage sont prévues dans les parois latérales du logement de douille intérieur (15), et **en ce que** les ailes (47) sont pourvues sur leurs côtés extérieurs de portions de rainures (59, 60) qui, lorsque les ailes (47) se trouvent dans la première position de pivotement, forment une portion des rainures de guidage (20, 22).

4. Connecteur à fiches selon la revendication 3, **caractérisé en ce que** la partie de douille (10) est réalisée pour l'enfichage opposé de deux parties de fiche sur des côtés opposés, et **en ce que** les moyens (31; 39, 41; 47) disposés de manière à pouvoir pivoter sont prévus des deux côtés de la partie de douille (10).
